Europäisches Patentamt

(19) European Patent Office

Office européen des brevets

(11) Publication number: **0 164 784**
**A1**

(12) **EUROPEAN PATENT APPLICATION**

(21) Application number: **85200758.2**

(22) Date of filing: **13.05.85**

(51) Int. Cl.⁴: **G 02 B 6/38**

(30) Priority: **23.05.84 NL 8401642**

(43) Date of publication of application:
**18.12.85 Bulletin 85/51**

(84) Designated Contracting States:
**DE FR GB IT NL**

(71) Applicant: **N.V. Philips' Gloeilampenfabrieken**
**Groenewoudseweg 1**
**NL-5621 BA Eindhoven(NL)**

(72) Inventor: **Bosman, Joseph Cornelis Marie**
**c/o INT. OCTROOIBUREAU B.V. Prof. Holstlaan 6**
**NL-5656 AA Eindhoven(NL)**

(74) Representative: **Weening, Cornelis et al,**
**INTERNATIONAAL OCTROOIBUREAU B.V. Prof.**
**Holstlaan 6**
**NL-5656 AA Eindhoven(NL)**

(54) **Method of interconnecting optical fibres.**

㊗ Method of interconnecting two bundles of optical fibres (4, 5), in which the plastics protective coating of the fibres is removed at the ends, the ends of both bundles are fused and the fused ends are interposed between two parallel glass plates (1, 14) which are connected to each other by means of an adhesive.

FIG.1

EP 0 164 784 A1

# Method of interconnecting optical fibres.

The invention relates to a method of connecting a first bundle of optical fibres, each of the fibres having a protective plastic coating, to a secondbundle of optical fibres which are also provided with a protective coating, in which method the protective coatings of the fibres to be interconnected are removed at the fibre-ends over a short distance, the unprotected ends of the respective bundles being placed opposite to each other in a plane surface and the ends of the first and of the second bundle being fused.

Such a method is known from a publication of the Electrical Communication Laboratories, viz. E.C.L. Technical Publication No. 281, published by Musashino Electrical Communication Laboratory, Nippon Telegraph and Telephone Public Corporation, Tokyo, Japan. Special reference is made to page 6, fig. 7 and page 8, fig. 10.

In practice, each pair of fused ends i.e. each separate splice, is provided with an armouring to protect the spliced connection against mechanical loading. A commonly used type of armouring consists of a plastics tube which is provided around the splice and which is made of, for example, ethylene-vinylacetate copolymer. Such a copolymer acts as a hot-melt adhesive which melts and adheres when it is heated. A metal splint, such as a brass splint, for example of arcuate cross-section is provided on the plastics tube. Finally, a plastics shrink-sleeve is provided on the plastics tube and the metal splint. The assembly thus obtained is heated, causing the EVA (ethylene-vinyl acetate) plastics tube to melt and the diameter of the shrink-sleeve to be reduced. The radial pressure exerted by the shrink-sleeve ensures that the entire splice is coated with the molten EVA material, thereby firmly embedding the splice. The armouring process is rather time-consuming, costly and it may easily lead to damage to the splice, especially if it has to be carried out under unfavourable field conditions. The armouring process is extremely time-consuming if many, for example a hundred, optical fibres have to be interconnected. Moreover, the housing in which the numerous armoured splices have to be accommodated, will become very large and hence difficult to handle.

It is the object of the invention to provide a method in which the spliced connections are provided with an armouring in an extremely simple and effective way.

According to the invention, this object is accomplished by means of a method as described in the opening paragraph, which is characterized in that the ends thus fused are interposed between two parallel glass plates which are interconnected by means of an adhesive.

The glass plates thus interconnected, hereinafter also referred to as "armouring", offer excelent protection against, for example, mechanical loading. Moreover, the possibility of the glass-fibres being stress-corroded in a humid environment is counteracted. Glass plates are, as opposed to plastics plates, impermeable to moisture. Another advantage is that the armouring in accordance with the invention can be easily provided, even by less-skilled personnel and under difficult conditions such as, for example, in the field (outdoors). Furthermore, the armouring is not very voluminous. The glass plates and the fibres have the same coefficient of expansion so that variations in temperature do not give rise to the development of stresses.

Preferably, the glass plates are so provided that they extend beyond that part of the bundle where the plastics protective coating has been removed. Thus, all fibre parts whose plastics protective coating has been removed are fully protected by the armouring, that is they are fully covered by the glass plates which have been interconnected by means of an adhesive.

In a further preferred embodiment of the method in accordance with the invention, the edges of the glass plates between which the bundles are interposed, are rounded. Consequently, the bundles can be bent over the edge without being damaged.

Preferably, both the first and the second bundle of optical fibres have the shape of a flat cable or of an ribbon cable, in which the optical fibres are arranged side by side in one plane. The parallel fibres are interposed, for example, between two plastics foils. Such bundles are highly flexible and they can easily be split into subbundles. Reinforcement wires, such as woven glass wires or wires of a strong plastics material, which replace one or more optical fibres, can easily be accommodated in the bundle. The plastics protection material can easily be removed from the ends of such a bundle consequently the ends can easily be spliced.

The optical fibre used in the method according to the invention is of a customary type, such as a monomode optical fibre or a multimode optical fibre. The optical fibre comprises a central glass-core having a diameter of 50 $\mu$m and a glass cladding having a thickness of 37.5 $\mu$m, the overall diameter of core plus cladding thus amounting to 125 $\mu$m.

A plastics sheath, the so-called primary coating, has been provided around the cladding, which sheath may consist of one or more layers. The diameter of the optical fibre, includingthe primary coating, is 250 $\mu$m.

The adhesive used in the armouring in accordance with the invention is preferably a transparent adhesive, the refractive index of which is equal to or substantially equal to that of the cladding of the fibres. Preferably, the cladding and the transparent adhesive have a refractive index ($n_D$) of approximately 1.5. Thus, it becomes possible to discern, using a microscope, the glass core and the glass cladding of the optical fibre. So, it is possible to immediately, visually evaluate the quality of the splice through the armouring, which in practice is an interesting and advantageous feature.

Preferably, the glass plates are connected to each other by interposing a foil which is made of a hot-melt adhesive, such as an adhesive of ethylene-vinyl acetate copolymer.

In accordance with another suitable method, the glass plates are connected to each other by means of an interposed, liquid radiation-durable lacquer which is cured by means of radiation through the glass plates.

The lacquer which can be cured by exposing it to radiation such as U.V.-light contains, for example, esters of an acrylic acid or of a methacrylic acid such as a mixture of monoacrylates, diacrylates and/or triacrylates and a small quantity, 0.1 - 8 % by weight, of a light sensitive initiator such as benzil dimethylketal.

It is not necessary to integrally connect both bundles of optical fibres, i.e. to interpose all the splices obtained between two glass plates which are connected to each other by means of an adhesive.

In a preferred embodiment, dependent upon the application, both bundles each comprise a plurality of sub-bundles which are interconnected, each separate pair of interconnected sub-bundles being interposed between two parallel glass plates which are connected to each other by means of an adhesive.

In yet another preferred embodiment, the invention relates to a method of connecting a first bundle of optical fibres, each fibre having a plastics protective coating, to a second bundle of optical fibres which also have a plastics protective coating, characterized in that the fibres, whose protective coatings have been removed at the ends, are positioned in parallel grooves provided in the surface of a light-cured plastics coating which is provided on a transparent supporting plate, in which method the grooved, plastics coated surface is an impression of the surface of a mould, the ends of the bires of the first bundle are placed opposite those of the second bundle, the ends are interconnected and a second supporting plate is placed over the optical fibres and connected to the first supporting plate by means of an adhesive.

The supporting plate, comprising the grooved coating of a light-cured plastics material, is manufactured in accordance with the, so-called, replica process.

In this process, a layer of a light-curable, for example, U.V.-light, lacquer is applied to the surface of a mould, which surface is the negative of the desired surface of the plastics coating. A transparent supporting plate is placed on the layer of liquid lacquer which is curedby exposing it through the transparent supporting plate. The supporting plate, together with the cured lacquer layer whose surface is the negative of the surface of the mould, is removed from the mould surface.

The quality, and in particular the form accuracy, of the grooved surface is excellent due to the extremely high accuracy of the mould. Thanks to the grooves, the optical fibres can be accurately positioned. Suitable lacquers, for example lacquers which can be cured by means of U.V.-light have been mentioned in the foregoing, The transparent supporting plate is preferably made of glass. The bonding between the glass and the cured lacquer layer can be improved by means of an adhesive, particularly a silane containing one or more hydrophilic groups such as hydroxyl groups or alkoxy groups and at least one group which co-polymerizes with the lacquer. A suitable silane is $\gamma$ -methacryl oxypropyl-trimethoxy silane.

Preferably, the grooves are V-shaped so that the position of the optical fibres in the grooves is accurately defined. The length of the grooves is at least equal to the length of the ends of the interconnected optical fibres, the plastics protective layers of which have been removed. Preferably, the depth of the grooves is smaller than the diameter of the optical fibres, so that the fibres extend partly above the surface of the plastics layer. This makes it possible to exactly position the fibres while pressing them into the grooves. The ends of the optical fibres can be interconnected by means of a splice or a glued joint. Preferably, the second supporting plate is made of glass.

The invention will now be described in detail with reference to a drawing, in which

Fig. 1 is a perspective view of component parts used in the method according to the invention,

Fig. 2 is a cross-sectional view of a protected splice in accordance with fig. 1, taken on the line II-II,

Fig. 3 is a cross-sectional view taken on the line III-III of Fig. 1, and

Fig. 4 is a cross-sectional view of a protected splice obtained in a preferred embodiment of the method in accordance with the invention,

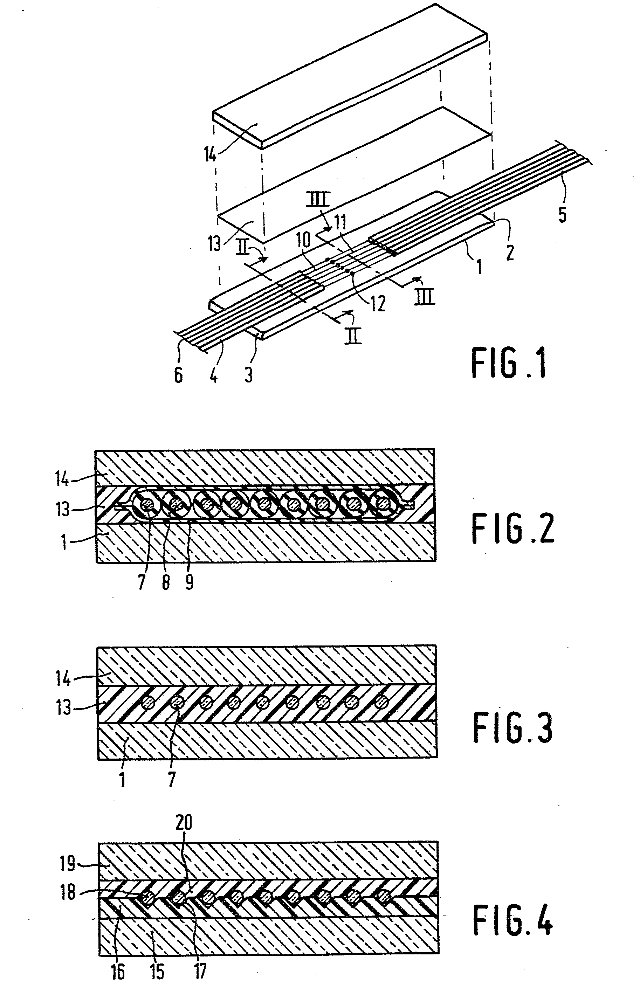

Reference numeral 1 in fig. 1 denotes a glass plate whose edges 2, 3 are rounded off inwards. On the glass plate 1 there are provided two interconnected bundles 4, 5 of optical fibres 6. The bundles 4, 5 have the shape of a flat cable (see fig. 3). Each bundle contains a number of parallel optical fibres 6 having a glass core 7 and a plastics protective coating 8. The diameter of the optical fibre 6 is 250 $\mu$m. The thickness of the protective coating 8 is approximately 62.5 $\mu$m. The optical fibres of each bundle are interposed between two plastics foils 9. The plastics protective coating 8 and the foils 9 are removed from the ends 10, 11 of the fibres 6 which form the bundles 4, 5. The unprotected ends 10, 11 are interconnected by means of a splice 12 which has been obtained by fusing the ends. A foil 13 of a hot-melt adhesive is placed on a glass plate 1 having bundles 4, 5 , on top of which a second glass plate 14 is placed. The assembly is heated under pressure, thus causing the hot-melt adhesive to melt. After the assembly has cooled the glass plates 1 and 14 are interconnected. It may be advantageous to use a light-curable lacquer instead of a hot-melt adhesive. In this way, the spliced ends 10, 11 of the optical fibres 6 which form the bundles 4, 5 are extremely well protected against mechanical loading and stress corrosion.

0164784

4.4.1985

Cross-sections of the resultant, glass-plate protected splices of optical fibres are shown in figures 2 and 3, in which the same component parts as in fig. 1 are denoted by the same reference numeral.

The cross-section in accordance with fig. 4 corresponds to that of fig. 3, with the exception of the connection in accordance with fig. 4 which contains a glass plate comprising a plastics coating and grooves. In fig. 4 reference numeral 15 denotes a glass plate which at one main surface has a coating 16 of a light-cured plastics material which has been provided with grooves 17. The plate 15 comprising the coating 16 and the grooves 17 is produced in accordance with the replica-process as described in detail hereinbefore. In the grooves 17 there are the interconnected ends of the optical fibres 18 whose plastics protective coating has been removed. The depth of the grooves 17 is such that the fibres 18 extend above the surface of the coating 16. A second glass plate 19 is connected to the first glass plate 15 by means of an adhesive layer 20.

0164784

CLAIMS

1.       A method of connecting a first bundle of optical fibres, each of the fibres having a plastics protective coating, to a second bundle of optical fibres which are also provided with a protective coating, in which method the protective coatings of the fibres to be interconnected are removed at the fibre-ends over a short distance, the unprotected ends of the respective bundles are placed opposite to each other in a plane surface and the ends of the first and of the second bundle are fused, characterized in that the ends thus fused are interposed between two parallel glass plates which are interconnected by means of an adhesive.

2.       A method as claimed in Claim 1, characterized in that the glass plates are so provided that they extend beyond that part of the bundle where the plastics protective coating has been removed.

3.       A method as claimed in Claim 2, characterized in that the edges of the glass plates, between which plates the bundles are interposed, are rounded at their inner surfaces.

4.       A method as claimed in Claim 1, characterized in that the glass plates are connected to each other by interposing a foil which is made of a hot-melt adhesive.

5.       A method as claimed in Claim 1, characterized in that the glass plates are connected to each other by means of an interposed, liquid, radiation-curable lacquer, which is cured by means of radiation through the glass plates.

6.       A method as claimed in any one of the preceding Claims, characterized in that each bundle comprises sub-bundles which are interconnected in accordance with the method described in the preceding Claims.

7.        A method of connecting a first bundle of optical fibres, each having a plastics protective coating, to a second bundle of optical fibres which also have a plastics protective coating, characterized in that the fibres, whose protective coatings have been removed at the ends, are positioned in parallel grooves provided in the surface of a light-cured plastics coating which is provided on a transparent supporting plate, in which method the grooved, plastics-coated surface is an impression of the surface of a mould, the ends of the fibres of the first bundle are placed opposite those of the second bundle, the ends are interconnected and second supporting plate is placed over the optical fibres and connected to the first supporting plate by means of an adhesive.

0164784

FIG.1

FIG.2

FIG.3

FIG.4

PHN11038

European Patent
Office

**EUROPEAN SEARCH REPORT**

0164784
Application number

EP 85 20 0758

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 060 196 (NORTHERN TELECOM LTD.) <br> * Claims 1,2,4-6; figures 1,4,8 * | 1,2,5-7 | G 02 B 6/38 |
| Y | EP-A-0 085 528 (NORTHERN TELECOM LTD.) <br> * Abstract * | 1,2,5-7 | |
| Y | SIXTH EUROPEAN CONFERENCE ON OPTICAL COMMUNICATION, 16th - 19th September 1980, pages 342-346, York, GB, R. JOCTEUR et al.:" A new fiber ribbon cable" <br> * Paragraph: "Splicing" Figure 3 * | 1,2,5-7 | |
| A | PATENTS ABSTRACTS OF JAPAN, vol. 7, no. 101, 28th April 1983, page 108 P 194; & JP - A - 58 25 611 (NIPPON DENSHIN DENWA KOSHA) 15-02-1983 <br> * Whole document * | 4 | TECHNICAL FIELDS SEARCHED (Int. Cl.4) <br><br> G 02 B |

The present search report has been drawn up for all claims

| Place of search | Date of completion of the search | Examiner |
|---|---|---|
| THE HAGUE | 03-09-1985 | MORRELL D.M. |